# EUROPEAN PATENT APPLICATION

(11) **EP 1 340 721 A2**
(43) Date of publication of application: **03.09.2003**
(21) Application number: 02380092.3
(22) Date of filing: 26.04.2002
(51) Int. Cl.: C03B 18/06

(54) **Edge roll machine for glass ribbon produced by a float process**

(30) Priority: 28.02.2002 ES 200200489
(71) Applicant: Daorje S.A., 33400 Aviles, Asturias (ES)
(72) Inventor: Garcia Lorenzo, José Antonio, 33400 Aviles (Asturias) (ES)
(74) Representative: Cobas Horcajo, Susana

(57) **Abstract**

The invention has a fixed frame (6) intended to be fastened to the ground (7) over which a mobile frame (8) is fitted, by means of a vertical swinging shaft (9); a frame (8) overlying on the ground (7) by means of wheels (10), at least one of them being motorised to obtain lateral and automatic swinging both of the frame (8) and the support arm (18) of the dragging truer (5) of the glass sheet. The arm (18) forms part of a turret, longitudinally displaceable over guides (13) and having a trolley (16), in turn being vertically displaceable over vertical guides (15) to automatically control the approach/separation movement of the truer (5) and its ascent/descent movements at the same time that a motor (20) provides the rotational movement.

## Description

### OBJECT OF THE INVENTION

The present invention refers to a machine intended to drag glass sheets at their exit from the forming oven thereof, which together with other identical machines determines not only the dragging of the glass sheet but, if necessary, the widening or narrowing of said sheet.

The object of the invention is to obtain a machine not only permitting an automatic control of the dragging truer, but an optimum precision in displacements thereof, both horizontally and vertically and in the lateral swinging direction.

### BACKGROUND OF THE INVENTION

In a conventional process to obtain glass sheets, the raw materials used in said sheet are poured in the cavity of an oven, reaching a fluid plastic condition with a thickness controlled by means of an overflow system, so that the sheet overflowing the oven capacity slides over a platform external to it, generally made of a tin sheet, acting over the glass sheet and on both sides of said platform, a series of dragging machines which as a basic component incorporate an axis which is partially superimposed to said platform and is finished in a driving truer over the continuous glass sheet.

More specifically, the truer of each sheet acts on the upper side of the glass sheet, even in the plastic condition, provoking not only the dragging thereof, but its widening or narrowing as necessary, specifically changing the charging position of the truers with respect to the glass sheet, so that if said truers are parallel to the forward direction of the glass sheet, only the dragging of said sheet is produced, whilst if said truers take an inclined position, the widening or narrowing of the sheet is simultaneously produced according to the orientation of its inclination.

As deduced from the abovementioned, for these machines to satisfactorily meet their function, both as dragging means and glass sheet forming means, they should be provided with means allowing the positional regulation of their truer, specifically permitting height and depth adjustment thereof in the penetration direction towards the middle area of the glass sheet displacement platform, and the inclination of the truer with respect to the forward direction of said sheet.

Until now, these positional adjustment operations of the truer are carried out manually, even the last one of them by conveniently mobilising the machine on the floor to incline the truer holder thereof, which evidently involves a difficult handling requiring skilled personnel, involving an important waste of time and a high risk of errors and impossibility to correct them during operation.

### DESCRIPTION OF THE INVENTION

The dragging machine according to the invention completely solves the abovementioned problem, permitting a full automation in the positional control of the truer, with absolute precision for the position selected at each moment.

For this purpose and more specifically, the machine consists of three clearly differentiated parts, namely, a fixed frame intended to be rigidly fastened to the ground; a mobile frame fitted with freedom of rotation over the fixed frame across a swinging axis and provided with wheels, allowing its displacement over the ground when it swings with respect to the fixed frame, to vary the orientation of the truer; and a turret, fitted over the mobile frame supporting said truer and endowing it with horizontal and vertical movement, together with the aforementioned lateral swinging movement, besides the rotating movement of the truer in order to achieve its operation.

More specifically, the fixed frame is intended to be situated next to one of the flotation line platform sides, specifically corresponding with the end of the machine nearest to said platform, and in turn at the nearest point to the latter it incorporates a boss or hinged connection vertical shaft for the mobile frame, which therefore may rotate or swing towards one or other side with a rotation centre located next to the edge of the oven exit platform, said mobile frame being activated by a motor by means of a screw system and controlled by an encoder permitting the precise establishment of the swinging degree of the mobile frame and, as a result, the inclination degree of the truer.

In its upper part, the mobile frame incorporates a pair of horizontally arranged longitudinal guides over which said turret is displaced, having for such a purpose a pair of sliding runners on the bars constituting said guides, at the same time that the turret itself incorporates vertical guides, that is, perpendicular to the former ones, over which in turn other runners belonging to a trolley supporting the truer holder arm also slide, these two longitudinal and vertical movements being carried out by means of screws and controlled by means of encoders, while the rotational movement of the truer is supplied by the classical motor.

Evidently, the driving means used may be variable, such as electric, pneumatic motors, etc., in the same way as the driving transmission systems may also be adapted to different constructional criteria and market availability at any moment.

### DESCRIPTION OF THE DRAWINGS

To complete the description being made and to permit a better understanding of the features of the invention in accordance with an example of a preferred embodiment thereof, this description is accompanied by a set of drawings which shows the following with an illustrative and non-limiting character:
Figure 1 shows a schematic plan view of a plurality of dragging machines for glass sheets made according to the object of the present invention, duly coupled to the exit platform sides of a forming oven for said glass sheets.
Figures 2a and 2b show similar views to that of the previous figure, but with the dragging machines respectively located to narrow the glass sheet and to widen it.

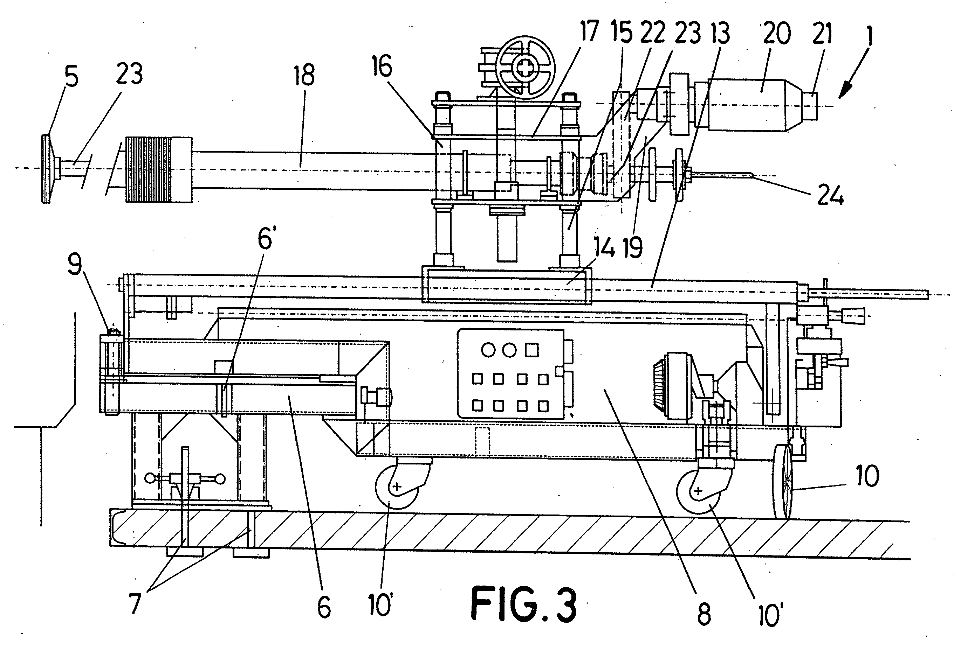

Figure 3 shows a schematic elevational side view of one of the dragging machines participating in the previous figures.

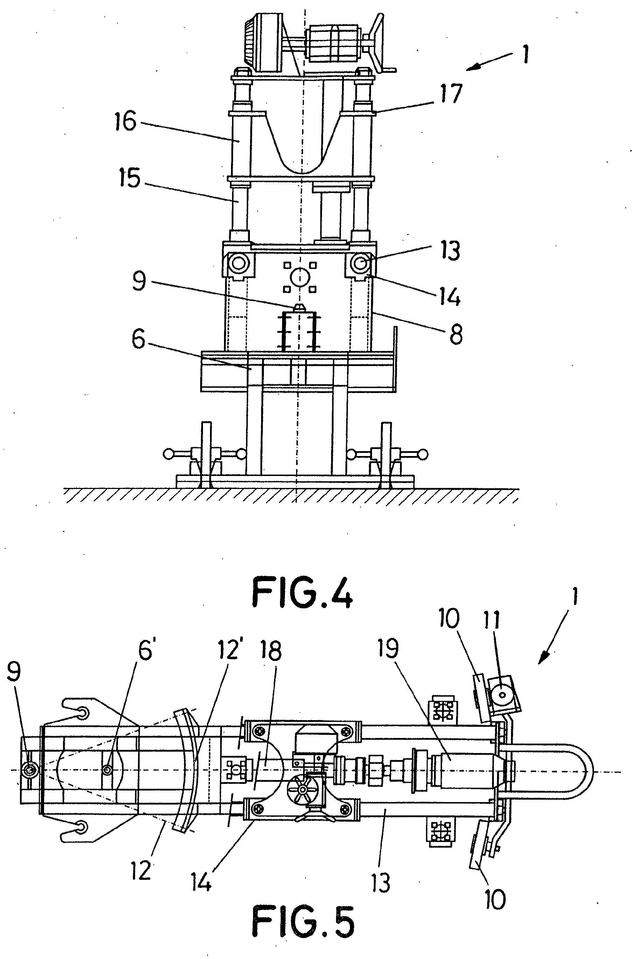

Figure 4 shows a machine profile view of the previous figure.
Figure 5 finally shows a plan view of said machine.

### PREFERRED EMBODIMENT OF THE INVENTION

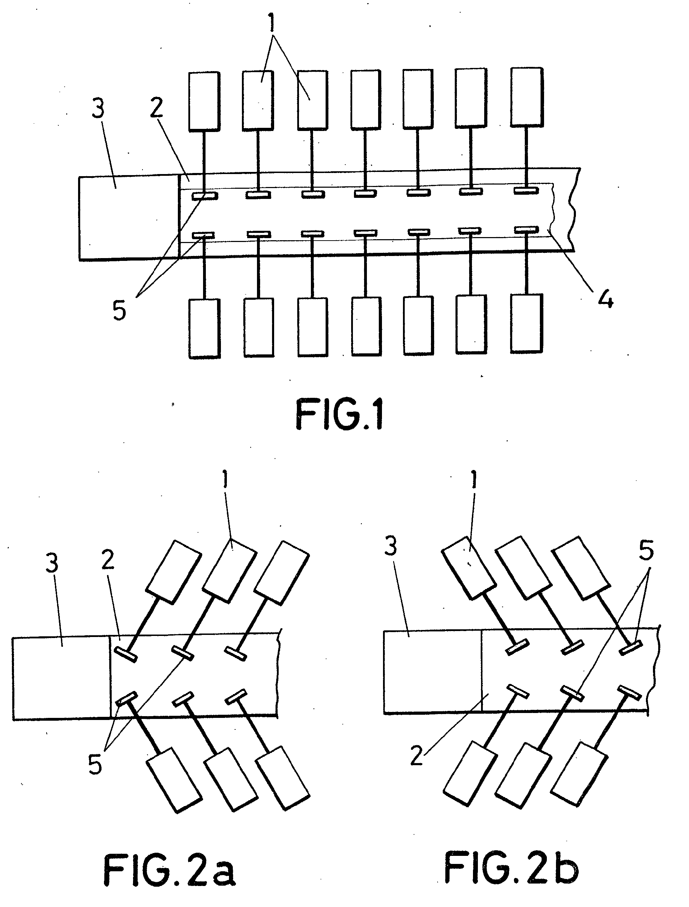

In the light of the mentioned figures, it may be observed how the dragging machine proposed by the invention and globally referenced with (1) is intended to be situated, forming a row of machines, on each side of the exit platform (2) of a flotation line forming oven (3), so that the different truers (5) act over the glass sheet (4), either to exclusively produce the longitudinal dragging thereof, as in the case shown in Figure 1, or to simultaneously manage narrowing or widening of said sheet, as respectively shown in Figures 2a and 2b, according to whether the truers (5) are parallel to the forward direction of the sheet (4) or take inclined positions in any direction and with any angle wideness.

Now then, this machine according to the invention has as one of its basic features the fact that its frame consists of two physically independent parts, a fixed frame (6) intended to be firmly fastened to the ground with the aid of threaded rods (7) and complementary nuts, and the mobile frame (8) fitted in a swinging way over the former. More specifically, the mobile frame (8) overlaps the fixed frame (6) at its end nearest to the platform (2) and is joined to the latter by means of a boss or vertical swinging shaft (9), whilst in its lower part the swinging or movement wheels (10) over the floor are located in the opposite end of the mobile frame (8), at least one of them being driven by a motor (11) for said displacement over the ground (7) of the aforementioned mobile frame (8), within the angle represented by a dotted line in Figure 5 and referenced with number (12). The arc segment (12') is that controlling the rotation angle of the mobile frame (8) and is incorporated in (6) and controlled by an encoder, which retransmits the orders and its positioning. A safety screw (6'), in the middle area of the fixed frame, acts as a lateral swinging limiter for the mobile frame (8), specifically with the aid of a pair of stops incorporated on the latter.

In its upper part, the mobile frame (8) incorporates a pair of longitudinal guides (13), preferably made as two chromed plated bars over which respective runners (14) slide, forming part of a turret in which in turn four vertical guides (15) participate, on which two runners (16) slide, these runners forming part of an arm (18) supporting trolley (17), which continues in the closing strut (24). of the trenels when the truer (5) is introduced in the tunnel and which is finished in the truer (5).

Runners (14) may be displaced by means of a screw system similar to the vertical runners (16) and anyway, its activation means will be aided by respective encoders permitting the exact control of the movement amplitude, as well as by some triggers and run ends. In its upper part, the turret incorporates a closing plate (18) actuating simultaneously as a support for the motor (20) activating plastic flow by means of the truer (5), as well as its encoder (21), motor (20) supplying movement by means of a transmission belt (22) and the corresponding pulley, to the bar (23) supporting the truer (5), a bar which is manually removable from its rear end (24). This set is continuously cooled.

Again returning to the displacement of the mobile frame (8), the wheels (10') only serve to transport the machine, since when it is operating they rise, leaving the weight of the mobile frame (8) supported by the fixed frame (6) and the wheels (10) which are responsible for positioning the mobile frame (8) according to the foreseen orientation for the truer (5).

According to this structure, the machine may adopt any angular position with respect to the oven (3) exit platform (2), that is, with the support axis (18) of the truer (5) perpendicular to the longitudinal axis of said platform or forming any angle with said axis, meaning that the truer (5) may also adopt any parallel position or inclination with respect to said axis, and in turn, said truer (5) may adopt any position closer or further with respect to the platform (2) axis by means of the horizontal runners (14), and any positioning in height by means of the positioning of the vertical runners (16), all the latter being perfectly automated and controlled, with a great movement precision and consequently, with also a high positional precision.

The machine is governed by remote control, so that a single person may handle the different machines or batteries, representing an important decrease of personnel with the subsequent cost reduction.

The remarkable length of the guides (13) over which the turret moves, allows removal of the truers (5) without the need of separating the machine from the flotation line platform (2).

## Claims

1. A dragging machine for glass sheets, of the type incorporating an arm finishing in a dragging truer, which may adopt any position with respect to the glass sheet exit platform of the corresponding oven, **characterised in that** in the same, two frames, a fixed frame (6) intended to be fastened to the ground, and a mobile frame (8) intended to swing sideways with respect to the fixed frame (6), by means of a boss of vertical shaft (9), participate.

2. A dragging machine for glass sheets according to claim 1, **characterised in that** the mobile frame (8) has wheels (10) for swinging or displacement over the ground, at least one of them being aided by a driving component (11) which collaborates with an encoder, so that the lateral swinging movement of the mobile frame, which is converted in a lateral swinging movement of the machine truer (5), is automatically carried out and with an encoder controlled amplitude.

3. A dragging machine for glass sheets according to previous claims, **characterised in that** on the mobile frame (8) there are two longitudinal and horizontal guides (13) over which a turret having a pair of lower runners (14) moves, these runners sliding over said guides (13), automatically activated by means of a screw or similar and also with the aid of an encoder; said turret further provided with four vertical guides (15), over which respective vertical runners (16), automatically activated by any means and with their movement also controlled by an encoder, are displaceable; runners (16) integrated in a support (17) for the arm (18) which in turn supports the closing strut (24) of the trenels and the dragging truer (5).

4. A dragging machine for glass sheets according to previous claims, **characterised in that** the arm (18) is longitudinally and vertically displaced by means of the horizontal (14) and vertical runners (16), transmitting these movements to the truer (5), at the same time that said arm (18) swings sideways and in a synchronised manner with the mobile frame (8), to provide the truer (5) a lateral swinging movement, whilst rotation of the truer is provided by a motor (20) assembled on the mobile trolley (17) of the turret and likewise aided by an encoder (21).
